# FASCICULE DE BREVET EUROPEEN

(11) **EP 1 923 669 B1**
(45) Date de publication et mention de la délivrance du brevet: **05.09.2012**
(21) Numéro de dépôt: 07120577.7
(22) Date de dépôt: 13.11.2007
(51) Int. Cl.: G01D 3/028, G01M 17/02

(54) **Procédé de datation d'une position angulaire remarquable d'un capteur porté par un pneumatique**
Datierungsverfahren einer Winkelposition, die von einem auf einem Reifen montierten Sensor aufgezeichnet wird
Method for dating a remarkable angular position of a sensor installed on a tyre

(30) Priorité: 15.11.2006 FR 0609989
(43) Date de publication de la demande: 21.05.2008
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: BERTRAND, David, 25000, BESANCON (FR)
(74) Mandataire: Dequire, Philippe Jean-Marie Denis

(56) Documents cités:
- WO-A-03/014693
- FR-A1- 2 824 904
- US-B1- 6 988 395

## Description

La présente invention concerne un procédé de datation d'une position angulaire remarquable d'un capteur porté par un pneumatique.

Il est connu de l'état de la technique d'équiper un pneumatique d'un capteur, par exemple un capteur de déformations, de déplacement, d'efforts, d'accélération, de pression, de contraintes..., pour mesurer le comportement du pneumatique en cours de roulage. Le capteur fournit un signal qui évolue au cours du temps, en fonction de la rotation du pneumatique.

Par exemple, dans le cas d'un capteur de déformations, le signal temporel fourni est caractéristique des déformations du pneumatique. Grâce à ce signal, il est possible d'évaluer la déformation du pneumatique à un instant précis.

Il est généralement plus intéressant de connaître la valeur du signal fourni par le capteur en une position angulaire particulière vis-à-vis d'un référentiel externe, plutôt qu'à un instant donné. A titre d'exemple de positions angulaires remarquables, on peut citer le sommet du pneumatique, le centre de l'aire de contact, l'entrée dans l'aire de contact ou la sortie de l'aire de contact.

On connaît dans l'état de la technique un procédé permettant de faire le lien entre les signaux temporels mesurés par le capteur et la position angulaire du capteur à un instant donné. Ce procédé connu consiste à munir le pneumatique, en plus du capteur, d'un dispositif de mesure de la rotation du pneumatique. Ce dispositif peut, par exemple, être porté par l'axe de rotation de la roue portant le pneumatique, comme c'est le cas pour les codeurs angulaires connus de l'état de la technique.

Cette solution présente cependant les inconvénients suivants.
- Le dispositif de mesure de la rotation du pneumatique est généralement externe à celui-ci alors que le capteur est porté par le pneumatique. Les informations concernant la rotation angulaire du pneumatique et celles mesurées par le capteur ne sont donc pas localisées au même endroit ce qui nécessite de prévoir des moyens de transfert de données.
- Du fait que l'information fournie par le capteur et l'information concernant la rotation sont obtenues au moyen de deux dispositifs distincts, les signaux fournis par ces deux dispositifs ne sont généralement pas transmis par les mêmes moyens de communication. Les mesures fournies par le capteur porté par le pneumatique sont couramment transmises par liaison radio, tandis que les mesures fournies par le dispositif de mesure de la rotation du pneumatique porté par le châssis du véhicule sont transmises par liaison filaire. Il en résulte souvent un décalage temporel entre les deux signaux mesurés ce qui nuit à la précision de la mesure.
- Enfin, pour des raisons de coûts, il est généralement préférable de réutiliser un codeur angulaire déjà embarqué sur le véhicule, comme par exemple celui utilisé par un dispositif d'antiblocage des roues. Cette dépendance de la fonction de mesure du capteur à une autre fonction du véhicule peut être gênante.

Des procédés de datation d'une position angulaire selon l'état de l'art sont décrits dans les documents WO 03/014693, US 6 988 395 et FR 2 824 904.

L'invention propose un procédé de datation d'une position angulaire remarquable d'au moins un capteur porté par un pneumatique ne présentant pas les inconvénients mentionnés ci-dessus.

A cet effet, l'invention a pour objet un procédé de datation d'une position angulaire remarquable d'au moins un capteur porté par un pneumatique en rotation par rapport à un référentiel externe, caractérisé en ce qu'il comprend les étapes suivantes :
- on forme, à partir d'un signal de sortie du capteur, un signal de référence susceptible de présenter un extremum remarquable au cours d'un tour du pneumatique,
- on détermine la date d'une position angulaire d'origine du capteur comme étant la date de l'extremum remarquable du signal de référence,
- on détermine la date de la position angulaire remarquable relativement à la date de la position angulaire d'origine.

Grâce à l'invention, on détermine la date d'une position angulaire remarquable quelconque du capteur porté par le pneumatique uniquement à partir des mesures qu'il fournit.

Il n'est pas nécessaire d'ajouter un dispositif de mesure de la rotation du pneumatique comme c'est le cas dans l'état de la technique.

Pour mettre en oeuvre un tel procédé, on utilise le fait que, lors du passage du capteur à proximité de l'aire de contact du pneumatique, la partie du pneumatique portant le capteur subit une sollicitation remarquable, par exemple une déformation ou une accélération maximales. Le signal fourni par le capteur présente alors un extremum remarquable qui permet de dater avec précision le passage du capteur dans la position angulaire dite d'origine. Cette position angulaire d'origine correspond au passage du capteur dans la moitié inférieure d'un plan sensiblement vertical contenant l'axe du pneumatique.

Selon un mode de réalisation préféré, au moins un couple de capteurs droit et gauche étant portés par le pneumatique et positionnés sensiblement symétriquement par rapport à un plan médian du pneumatique, on forme le signal de référence en appliquant à chaque signal de sortie des capteurs une fonction prédéterminée, et en combinant les sorties des fonctions prédéterminées pour obtenir le signal de référence.

Ce mode de réalisation est particulièrement avantageux car il réduit le risque que l'extremum remarquable de l'un des signaux fournis par les capteurs soit peu marqué, voire invisible. Une telle situation se produit généralement lorsque le pneumatique est soumis à des efforts latéraux importants. Le fait d'utiliser deux capteurs positionnés sensiblement symétriquement par rapport à un plan médian du pneumatique permet de s'affranchir de ce risque puisque lors d'une sollicitation latérale prononcée, seul le signal de l'un des deux capteurs est perturbé. La fonction prédéterminée a pour but de privilégier le signal qui n'est pas perturbé au regard du signal qui est perturbé. Ainsi, le signal de référence obtenu en combinant les sorties des deux fonctions prédéterminées est principalement influencé par le signal qui n'est pas perturbé et dont on peut facilement déterminer la date de l'extremum remarquable.

Par exemple, on peut utiliser comme fonction prédéterminée la fonction f suivante appliquée à un signal s(t) :
- si s(t)>M, alors f(s(t))=M,
- si s(t)<M, alors f(s(t))=M+k.(s(t)-M),
où M désigne la moyenne du signal s(t) au cours d'un intervalle prédéfini et k est un coefficient de multiplication positif.

Un procédé de datation selon l'invention peut en outre comporter plusieurs des caractéristiques suivantes.
- Le signal de sortie du capteur est caractéristique d'une flexion ou d'une déradialisation du pneumatique.
- L'extremum remarquable du signal de référence correspond à un maximum local en valeur absolue de l'amplitude du signal lorsque le signal de sortie du capteur est caractéristique d'une flexion du pneumatique ou à un maximum local en valeur absolue de la dérivée du signal lorsque le signal de sortie du capteur est caractéristique d'une déradialisation du pneumatique.
- Pour dater l'extremum remarquable du signal de référence, on utilise un signal suiveur du signal de référence comprenant deux états, et on date l'extremum remarquable du signal de référence à une date de transition du signal suiveur d'un état à l'autre.
- Le signal suiveur s'(t) du signal de référence sr(t) est un signal discret à pas de temps p dont les deux états sont définis de la façon suivante:
   ο S'(p)=(1-λ).s'(p-1)+λ.(s(p-1)-s'(p)),
   o si s'(p)>s(p), alors s'(p)=s(p),
où λ, est une valeur comprise entre 0 et 1 et la valeur initiale de s' est choisie aléatoirement.
- On détermine la date de la position angulaire remarquable du capteur à partir de la date de la position angulaire d'origine, d'une vitesse de rotation du pneumatique estimée et de l'écart angulaire entre la position angulaire remarquable et la position angulaire d'origine.
- On prédit la date du prochain passage du capteur dans la position angulaire remarquable à partir d'une vitesse de rotation du pneumatique estimée lors d'un tour précédent du pneumatique et de la date déterminée du passage du capteur dans la position angulaire d'origine.
- On détermine la date de la position angulaire remarquable du capteur à partir de la date de la position angulaire d'origine, d'une accélération en rotation du pneumatique estimée et de l'écart angulaire entre la position angulaire remarquable et la position angulaire d'origine.
- Au moins deux capteurs étant portés par le pneumatique, l'écart angulaire entre capteurs, dans un référentiel lié au pneumatique, étant égal à l'écart angulaire entre la position angulaire remarquable et la position angulaire d'origine, on détermine la date à laquelle l'un des capteurs est dans la position angulaire remarquable en l'assimilant à la date à laquelle l'autre capteur est dans la position angulaire d'origine.

L'invention sera mieux comprise à la lecture de la description qui va suivre, donnée uniquement à titre d'exemple et faite en se référant aux schémas annexés dans lesquels :
- la figure 1 est un schéma d'un pneumatique muni d'un capteur de déformations,
- la figure 2 est un graphique représentant des signaux fournis par un capteur de déformations porté par un pneumatique en roulage sur un sol,
- la figure 3 est un graphique identique à celui de la figure 1 dans des conditions dans lesquelles un effort moteur est appliqué sur le pneumatique,
- les figures 4a et 4b sont des graphiques identiques à ceux des figures 1 et 2 dans des conditions dans lesquelles le pneumatique est soumis à une poussée latérale positive et à une poussée latérale négative,
- la figure 5 est un graphique représentant la fonction prédéterminée,
- la figure 6 est un graphique représentant au cours du temps les deux signaux droit et gauche ainsi que le signal de référence,
- la figure 7 est un graphique représentant au cours du temps le signal de référence ainsi que le signal suiveur,
- la figure 8 représente un pneumatique comprenant deux capteurs de déformations placés en deux positions angulaires différentes du pneumatique.

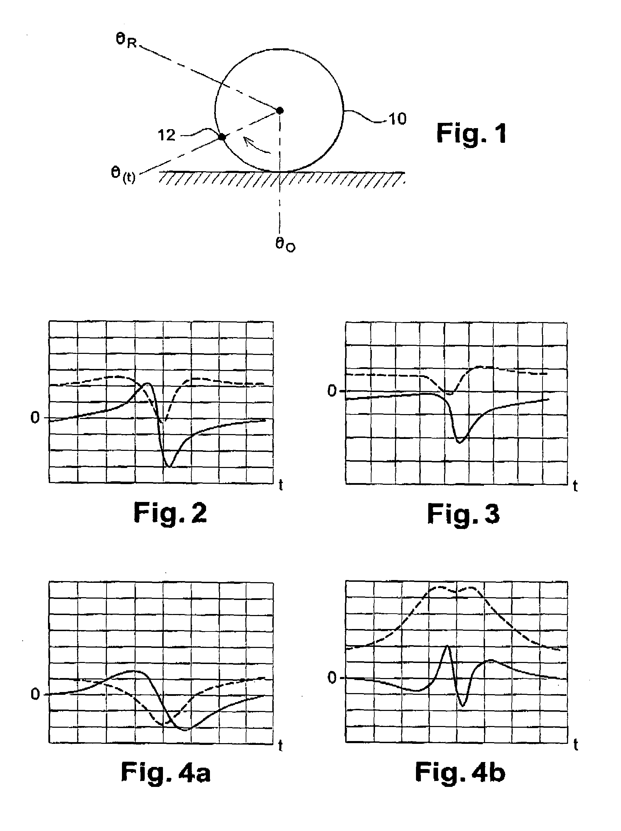

On a représenté sur la figure 1 un pneumatique 10 muni d'un capteur 12 de déformations ou de contraintes de type classique, positionné en zone basse intérieure du pneumatique. Un tel capteur est apte à fournir deux types de signaux caractéristiques respectivement d'une flexion et d'une déradialisation du pneumatique.

On note θ(t) la position angulaire du capteur 12 au cours du temps, par rapport à un référentiel externe.

Au cours du roulage du pneumatique sur le sol, la position angulaire θ(t) du capteur évolue et l'allure des signaux fournis par le capteur de déformations est représentée sur la figure 2. La courbe en trait pointillé représente le signal s(t) de flexion fourni par le capteur et la courbe en trait plein représente le signal de déradialisation fourni par le capteur. Les valeurs de ces deux signaux varient au cours du temps, à mesure que le pneumatique roule sur le sol et que la position angulaire θ(t) du capteur 12 par rapport à un référentiel externe évolue.

Chacun de ces deux signaux présente, au cours d'un tour du pneumatique 10, un extremum remarquable visible sur la figure 2. L'extremum remarquable du signal de flexion s(t) en trait pointillé est un minimum local de son amplitude et l'extremum remarquable visible sur le signal de déradialisation en trait plein est un maximum local de la dérivée du signal.

Ces deux extrema remarquables sont caractéristiques du passage du capteur 12 au centre de l'aire de contact du pneumatique avec le sol. En d'autres termes, cela correspond à une position angulaire du capteur, dite position angulaire d'origine θ₀, dans laquelle le capteur est situé dans la moitié inférieure d'un plan sensiblement vertical comprenant l'axe de la roue. On note t₀ l'instant de passage du capteur dans la position angulaire d'origine θ₀.

Comme on peut le constater sur la figure 2, les extrema remarquables des deux signaux sont sensiblement simultanés. Aussi, dans la suite de la description, on ne considèrera que le signal de flexion fourni par le capteur 12.

Le signal de flexion fourni par le capteur 12 est utilisé pour dater la position angulaire d'origine θ₀ du capteur 12, à partir de laquelle on pourra déduire la date d'une position angulaire remarquable quelconque θ_{R}. De la qualité de la datation de la position angulaire d'origine du capteur 12 dépend donc la qualité de la datation de la position angulaire remarquable quelconque θ_{R}.

Lorsque le pneumatique est en roulage dans des conditions normales sur le sol, le signal fourni par le capteur 12 présente un extremum remarquable qui est très marqué, comme cela est visible sur la figure 2. En revanche, lorsque le pneumatique 12 roule sur le sol en étant soumis à un effort moteur, ou à une poussée latérale positive ou négative, l'extremum remarquable du signal peut être moins marqué. Les signaux fournis par un capteur dans ces trois situations sont respectivement représentés sur les figures 3, 4a et 4b.

En particulier, lorsque le pneumatique est soumis à une très forte poussée latérale négative, le signal présente un minimum local si peu marqué qu'il est très difficile de le détecter et de le dater. Un tel cas est représenté sur la figure 4b. En revanche, lorsque le pneumatique est soumis à une très forte poussée latérale positive, le minimum local du signal est correctement marqué, comme cela est visible sur la figure 4a.

Le procédé de l'invention propose donc de monter sur le pneumatique deux capteurs de déformations droit et gauche positionnés sensiblement symétriquement par rapport à un plan médian du pneumatique, de sorte que lorsque le pneumatique est soumis à une forte poussée latérale, au moins l'un des deux signaux droit sd(t) et gauche sg(t) fournis par les deux capteurs présente un minimum local clairement marqué. Du fait de la localisation symétrique des deux capteurs sur le pneumatique, la position angulaire des deux capteurs est identique et les minima locaux des deux signaux sd(t) et sg(t) sont simultanés. Il suffit donc de détecter l'un des deux minima locaux pour dater le passage du pneumatique dans la position angulaire d'origine.

On forme alors un signal de référence sr(t) influencé par les deux signaux sd(t) et sg(t) fournis en sortie des deux capteurs, mais principalement par le signal présentant un minimum local très marqué.

Pour cela, on applique à chaque signal sd(t) et sg(t) de sortie des capteurs une fonction prédéterminée f(s(t)) et on combine en les additionnant les sorties de ces fonctions pour obtenir le signal de référence sr(t).

La fonction prédéterminée f appliquée à un signal s(t) est la suivante:
si s(t)>M, alors f(s(t))=M,
si s(t)<M, alors f(s(t))=M+k.(s(t)-M),
où M désigne la moyenne du signal s(t) au cours d'un intervalle prédéfini et k est un coefficient de multiplication positif.

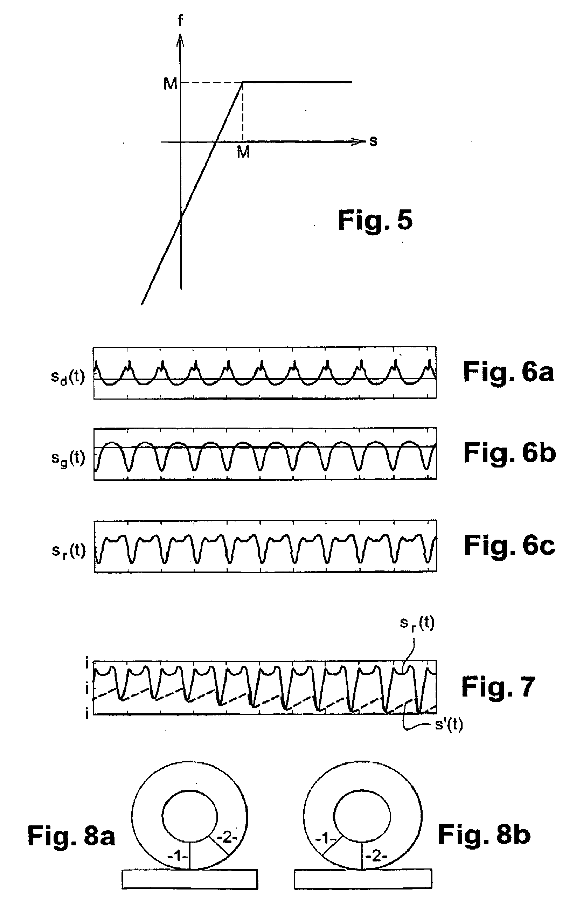

Cette fonction, qui est schématisée sur la figure 5, permet de limiter l'influence des valeurs supérieures à la moyenne des signaux sd(t) et sg(t), et d'augmenter l'influence des valeurs inférieures à la moyenne des signaux.

Le signal de référence sr(t) obtenu grâce à cette combinaison donne systématiquement une part prépondérante au signal du capteur pour laquelle la détermination du minimum local est la plus facile, si bien que le signal de référence sr(t) présente un extremum local visible en toutes conditions. Ainsi, il est possible de dater la position angulaire d'origine des capteurs de manière simple, quelles que soient les contraintes appliquées au pneumatique.

Pour dater l'extremum remarquable du signal de référence sr(t), on utilise un signal s' suiveur du signal de référence sr(t) comprenant deux états, et on date l'extremum remarquable du signal de référence sr(t) à une date de transition du signal suiveur s' d'un état à l'autre.

Pour réduire les ressources de calcul nécessaires au suivi du signal de référence sr(t), on utilise un signal suiveur s' discret à pas de temps p et défini de la façon suivante :
s'(p)=(1-λ).s'(p-1)+λ.(s(p-1)-s'(p)),
si s'(p)>s(p), alors s'(p)=s(p),
où λ est une valeur comprise entre 0 et 1 qui règle la rapidité de convergence du signal suiveur s'(p) vers le signal s(p). La valeur initiale de s' est choisie aléatoirement.

Le passage du signal s(p) par un extremum est détecté par une transition dans le mode de suivi de s'(p). Si s'(p-1)=s(p-1) et s'(p)<s(p), alors l'instant p-1 correspond à un minimum.

Pour illustrer cela, on a représenté sur la figure 6 les signaux fournis par deux capteurs portés par un pneumatique, dans le cas où ce pneumatique est soumis à une forte poussée latérale. Comme on peut le constater sur la figure 6a, représentant le signal du capteur droit, les minima locaux d'amplitude sont peu marqués et difficilement détectables tandis que sur le signal fourni par le capteur gauche, et représenté sur la figure 6b, les minima locaux sont très marqués.

Sur ces deux figures 6a et 6b, le trait horizontal représente la moyenne des signaux.

Sur la figure 6c, on a représenté le signal de référence sr(t) obtenu en combinant les signaux obtenus en sortie de la fonction prédéterminée appliquée aux signaux droit sd(t) et gauche sg(t). On constate que, sur cette figure, les minima locaux du signal de référence sr(t) sont très marqués si bien qu'il est très facile de dater la position angulaire d'origine du pneumatique.

On a représenté sur la figure 7 le signal de référence sr(t) ainsi que le signal suiveur s'(t). Le passage du signal de référence par le minimum local est détecté par une transition dans le mode de suivi du signal suiveur.

La rapidité de convergence du signal suiveur peut être modifiée à l'aide du paramètre λ. Dans la majorité des situations, ce paramètre λ est une constante. Cependant, lorsque le pneumatique subit des grandes variations de sa vitesse de rotation, il peut être préférable d'utiliser une valeur de λ qui dépend de la vitesse. L'homme du métier saura adapter la valeur du paramètre λ aux situations rencontrées, pour éviter notamment de confondre le bruit du signal avec la présence d'un minimum local d'amplitude.

Le procédé qui vient d'être décrit permet donc de dater de manière simple le passage des capteurs portés par le pneumatique dans une position angulaire d'origine θ₀, sensiblement à la verticale de l'axe du pneumatique. Par la suite on ne parlera de la position angulaire que d'un capteur, la position angulaire de l'autre capteur étant identique, du fait de leur positionnement symétrique sur le pneumatique.

Grâce au procédé de l'invention, on peut également dater une position angulaire remarquable θ_{R} quelconque du capteur de déformations par rapport à un référentiel externe. Cette position angulaire remarquable quelconque peut être caractérisée de manière simple par son écart angulaire (θ_{R}-θ₀) avec la position angulaire d'origine θ₀. On note t_{R} l'instant de passage du capteur dans la position angulaire remarquable. Pour dater cette position angulaire remarquable, plusieurs modes de réalisation sont possibles.

Selon un premier mode de réalisation, on estime la vitesse de rotation du pneumatique, et on détermine la date de la position angulaire remarquable du capteur à partir de la date de la position angulaire d'origine, de la vitesse estimée et de l'écart angulaire entre la position angulaire remarquable et la position angulaire d'origine. La vitesse de rotation du pneumatique peut être estimée grâce à la connaissance de la distance du capteur à l'axe du pneumatique et à la connaissance de la valeur d'une période de rotation du pneumatique qui correspond à l'écart temporel entre deux détections d'extrema remarquable.

Pour dater la position angulaire remarquable du capteur, deux approches sont possibles :
- Selon une première variante, on prédit l'instant auquel le capteur sera dans la position angulaire remarquable grâce à la connaissance de la vitesse de rotation du pneumatique estimée lors du tour précédent et de la date du passage du capteur dans la position angulaire d'origine. On peut alors déclencher une mesure du capteur à la volée, au cours de la rotation du pneumatique, à l'instant prédit.
- Selon une seconde variante, on garde en mémoire le signal de référence obtenu par le procédé de l'invention au cours d'une période de rotation du pneumatique. Grâce à la connaissance de la période et au repérage angulaire de ce signal au moyen de l'extremum local, il est possible de déterminer l'instant auquel le capteur est passé dans la position angulaire remarquable et d'extraire du signal mémorisé les données mesurées par le capteur à cet instant.

Cette seconde variante est plus robuste puisqu'elle permet de connaître avec une meilleure précision la vitesse du pneumatique au cours de la période dont on extrait les mesures, mais elle présente plusieurs inconvénients. Tout d'abord, elle nécessite une mémorisation des signaux pendant un tour de roue de manière à les traiter ultérieurement. De plus, elle retarde la disponibilité des informations mesurées puisque l'on est obligé d'attendre la fin d'un tour du pneumatique avant de connaître la valeur mesurée.

Selon un deuxième mode de réalisation, on estime l'accélération en rotation du pneumatique, et on détermine la date de la position angulaire remarquable du capteur à partir de la date de la position angulaire d'origine, de l'accélération estimée et de l'écart angulaire entre la position angulaire remarquable et la position angulaire d'origine. Ce procédé pour déterminer la date de la position angulaire remarquable est plus précis que le procédé du premier mode de réalisation mais il nécessite d'avoir pu observer les dates de trois passages du capteur dans la position angulaire d'origine pour estimer l'accélération en rotation du pneumatique. Les calculs sont ensuite semblables à ceux décrits dans l'hypothèse d'une vitesse constante.

Selon un troisième mode de réalisation, on détermine la date de la position angulaire remarquable en mettant en oeuvre les étapes suivantes :
- on déclenche, à compter de la date déterminée du passage du capteur à la position angulaire d'origine, une mesure de l'angle de rotation du pneumatique, par exemple au moyen d'un codeur angulaire,
- on détermine la date de la position angulaire remarquable à la date à laquelle on mesure un angle de rotation du pneumatique égal à l'écart angulaire entre la position angulaire remarquable et la position angulaire d'origine.

Ce mode de réalisation permet d'utiliser des codeurs angulaires déjà présents sur la roue portant le pneumatique.

Enfin, un quatrième mode de réalisation pour déterminer la date de la position angulaire remarquable consiste à munir le pneumatique d'au moins deux capteurs de déformations dont l'écart angulaire entre capteurs, dans un référentiel lié au pneumatique, est connu. Une telle situation est représentée sur la figure 8.

Lorsque l'on détecte le passage du premier capteur dans la position angulaire d'origine, on est assuré que le second capteur se trouve dans une position angulaire remarquable connue, qui peut être déterminée grâce à la connaissance de l'écart angulaire entre les deux capteurs. On peut alors déterminer la date à laquelle le second capteur est dans la position angulaire remarquable en l'assimilant à la date à laquelle le premier capteur est dans la position angulaire d'origine. Bien entendu, on peut procéder de même lorsque le second capteur passe dans la position angulaire d'origine.

On notera que les quatre modes de réalisation décrits ci-dessus pour déterminer la date de la position angulaire remarquable peuvent être combinés.

L'invention ne se limite pas aux modes de réalisation qui viennent d'être décrits. En particulier, l'invention peut s'appliquer à tout type de capteur porté par un pneumatique, et dont le signal qu'il fournit présente un extremum remarquable lorsque le capteur passe à proximité de l'aire de contact. A titre d'exemple, l'invention s'applique également à des capteurs de déplacement, d'effort, de déformation, d'accélération, de pression ou à un capteur de type clou. Le capteur peut être placé aussi bien dans le flanc, en zone basse, dans la bande de roulement, dans un pain de gomme de la bande de roulement ou au sommet du pneumatique.

## Revendications

1. Procédé de datation d'une position angulaire remarquable (θ_{R}) d'au moins un capteur (12) porté par un pneumatique (10) en rotation par rapport à un référentiel externe, le capteur étant agencé pour mesurer des déformations d'une partie du pneumatique (10), ces déformations étant remarquables lors du passage à proximité de l'aire de contact du pneumatique, **caractérisé en ce que** :
- au moins un couple de capteurs droit et gauche étant portés par le pneumatique et positionnés sensiblement symétriquement par rapport à un plan médian du pneumatique, on forme, à partir des signaux de sortie (s(t)) des capteurs (12), un signal de référence (sr(t)) susceptible de présenter un extremum remarquable au cours d'un tour du pneumatique (10) de la manière suivante :
○ on applique à chaque signal de sortie (sd(t), sg(t)) des capteurs une fonction prédéterminée (f(s)),
○ on combine les sorties (f(sd(t)), f(sg(t))) des fonctions prédéterminées pour obtenir le signal de référence (sr(t)),
- on détermine la date (t₀) d'une position angulaire d'origine (θ₀) du capteur comme étant la date de l'extremum remarquable du signal de référence,
- on détermine la date (t_{R}) de la position angulaire remarquable (θ_{R}) relativement à la date de la position angulaire d'origine.

2. Procédé selon la revendication 1, dans lequel le signal de sortie du capteur (12) est caractéristique d'une flexion ou d'une déradialisation du pneumatique (10).

3. Procédé selon la revendication 2, dans lequel l'extremum remarquable du signal de référence (sr(t)) correspond à un maximum local en valeur absolue de l'amplitude du signal lorsque le signal de sortie du capteur (12) est caractéristique d'une flexion du pneumatique (10) ou à un maximum local en valeur absolue de la dérivée du signal lorsque le signal de sortie du capteur (12) est caractéristique d'une déradialisation du pneumatique (10).

4. Procédé selon l'une quelconque des revendications précédentes, dans lequel la fonction prédéterminée (f) appliquée à un signal s(t) est la suivante :
si s(t)>M, alors f(s(t))=M,
si s(t)<M, alors f(s(t))=M+k.(s(t)-M),
où M désigne la moyenne du signal s(t) au cours d'un intervalle prédéfini et k est un coefficient de multiplication positif.

5. Procédé selon l'une quelconque des revendications précédentes, dans lequel pour dater l'extremum remarquable du signal de référence (sr(t)), on utilise un signal suiveur (s'(t)) du signal de référence (sr(t)) comprenant deux états, et on date l'extremum remarquable du signal de référence (sr(t)) à une date de transition du signal suiveur (s'(t)) d'un état à l'autre.

6. Procédé selon la revendication 5, dans lequel le signal suiveur s'(t) du signal de référence sr(t) est un signal discret à pas de temps p dont les deux états sont définis de la façon suivante :
- s'(p)=(1-λ).s'(p-1)+λ.(s(p-1)-s'(p)).
- si s'(p)>s(p), alors s'(p)=s(p),
où λ est une valeur comprise entre 0 et 1 et la valeur initiale de s' est choisie aléatoirement.

7. Procédé selon l'une quelconque des revendications précédentes, dans lequel on détermine la date (t_{R}) de la position angulaire remarquable (θ_{R}) du capteur à partir de la date (t₀) de la position angulaire d'origine (θ₀), d'une vitesse de rotation du pneumatique estimée et de l'écart angulaire (θ_{R}-θ₀) entre la position angulaire remarquable et la position angulaire d'origine (θ₀).

8. Procédé selon la revendication 7, dans lequel on prédit la date (t_{R}) du prochain passage du capteur dans la position angulaire remarquable (θ_{R}) à partir d'une vitesse de rotation du pneumatique estimée lors d'un tour précédent du pneumatique et de la date déterminée du passage du capteur dans la position angulaire d'origine.

9. Procédé selon l'une quelconque des revendications précédentes, dans lequel on détermine la date (t_{R}) de la position angulaire remarquable (θ_{R}) du capteur à partir de la date de la position angulaire d'origine (θ₀), d'une accélération en rotation du pneumatique estimée et de l'écart angulaire entre la position angulaire remarquable et la position angulaire d'origine

10. Procédé selon l'une quelconque des revendications précédentes, dans lequel au moins deux capteurs étant portés par le pneumatique, l'écart angulaire entre capteurs, dans un référentiel lié au pneumatique, étant égal à l'écart angulaire (θ_{R}-θ₀) entre la position angulaire remarquable (θ_{R}) et la position angulaire d'origine (θ₀), on détermine la date (t_{R}) à laquelle l'un des capteurs est dans la position angulaire remarquable (θ_{R}) en l'assimilant à la date à laquelle l'autre capteur est dans la position angulaire d'origine (θ₀).

## Claims

1. A method of timing a remarkable angular position (θ_{R}) of at least one sensor (12) carried by a tire (10) rotating relative to an external frame of reference, the sensor (12) being arranged to measure deformation in a portion of the tire (10), the deformation being remarkable when passing close to the contact area of the tire, the method being **characterized by**:
- at least one pair of right and left sensors being carried by the tire, the sensors of the pair being positioned substantially symmetrically about a midplane of the tire, forming as follows from the output signals (s(t)) of the sensors a reference signal (sᵣ(t)) suitable for presenting a remarkable extremum during one revolution of the tire (10):
• a predetermined function (f(s)) is applied to each of the output signals (s_{d}(t), s_{g}(t)) of the sensors;
• the outputs (f(s_{d}(t)), f(s_{g}(t))) of the predetermined function are combined to obtain the reference signal (sᵣ(t));
- determining the time (t₀) of an origin angular position (θ₀) of the sensor as being the time of the remarkable extremum of the reference signal; and
- determining the time (t_{R}) of the remarkable angular position (θ_{R}) relative to the time of the origin angular position.

2. A method according to claim 1, in which the output signal of the sensor (12) is characteristic of bending or deradialization of the tire (10).

3. A method according to claim 2, in which the remarkable extremum of the reference signal (sᵣ(t)) corresponds to a local maximum in the absolute value of the amplitude of the signal when the signal output by the sensor (12) is characteristic of bending of the tire (10), or to a local maximum in the absolute value of the derivative of the signal when the signal output by the sensor (12) is characteristic of deradialization of the tire (10).

4. A method according to any preceding claim, in which the predetermined function (f) applied to a signal s(t) is as follows:
if s(t) > M, then f(s(t)) = M;
if s(t) < M, then f(s(t)) = M+k.(s(t)-M);
where M designates the mean of the signal s(t) during a predefined interval, and k is a positive multiplication coefficient.

5. A method according to any preceding claim, in which in order to time the remarkable extremum of a reference signal (sᵣ(t)), use is made of a tracking signal (s'(t)) tracking the reference signal (sᵣ(t)) and having two states, and the remarkable extremum of the reference signal (sᵣ(t)) is timed at the time the tracking signal (s'(t)) changes from one state to the other.

6. A method according to claim 5, in which the tracking signal s'(t) tracking the reference signal sᵣ(t) is a discrete signal having a time step p with two states defined as follows:
• s'(p) = (1-λ).s'(p-1) + λ.(s(p-1)-s'(p));
• if s'(p) > s(p) then s'(p) = s(p);
where λ is a value lying in the range 0 to 1, and the initial value of s' is selected randomly.

7. A method according to any preceding claim, in which the time (t_{R}) of the remarkable angular position (θ_{R}) of the sensor is determined from the time (t₀) of the origin angular position (θ₀) from an estimated speed of rotation of the tire, and from the angular offset (θ_{R}-θ₀) between the remarkable angular position and the origin angular position (θ₀).

8. A method according to claim 7, in which the time (t_{R}) of the next passage of the sensor through the remarkable angular position (θ_{R}) is predicted from a speed of rotation of the tire as estimated during a preceding revolution of the tire and from the time determined for the passage of the sensor through the origin angular position.

9. A method according to any preceding claim, in which the time (t_{R}) of the remarkable angular position (θ_{R}) of the sensor is determined from the time of the origin angular position (θ₀), from an estimated rotary acceleration of the tire, and from the angular offset between the remarkable angular position and the origin angular position.

10. A method according to any preceding claim, in which at least two sensors are carried by the tire, the angular offset between the sensors in a frame of reference associated with the tire being equal to the angular offset (θ_{R}-θ₀) between the remarkable angular position (θ_{R}) and the origin angular position (θ₀), with the time (t_{R}) at which one of the sensors is in the remarkable angular position (θ_{R}) being determined by assuming that it is equal to the time at which the other sensor is in the origin angular position (θ₀).

## Patentansprüche

1. Verfahren zum Datieren einer bemerkenswerten Winkelstellung (θ_{R}) mindestens eines von einem drehenden Luftreifen (10) getragenen Sensors (12) bezüglich eines externen Bezugssystems, wobei der Sensor eingerichtet ist, um Verformungen eines Teils des Luftreifens (10) zu messen, wobei diese Verformungen beim Durchgang in der Nähe des Kontaktbereichs des Luftreifens bemerkenswert sind, **dadurch gekennzeichnet, dass**:
- wenn mindestens ein Paar von rechten und linken Sensoren vom Luftreifen getragen werden und bezüglich einer Mittelebene des Luftreifens im Wesentlichen symmetrisch positioniert sind, ausgehend von den Ausgangssignalen (s(t)) der Sensoren (12) ein Bezugssignal (sr(t)), das während einer Umdrehung des Luftreifens (10) einen bemerkenswerten Extremwert aufweisen kann, folgendermaßen geformt wird:
○ an jedes Ausgangssignal (sd(t), sg(t)) der Sensoren wird eine vorbestimmte Funktion (f(s)) angewendet,
○ die Ausgänge (f(sd(t)), f(sg(t))) der vorbestimmten Funktionen werden kombiniert, um das Bezugssignal (sr(t)) zu erhalten,
- das Datum (t₀) einer Anfangs-Winkelstellung (θ₀) des Sensors als das Datum des bemerkenswerten Extremwerts des Bezugssignals bestimmt wird,
- das Datum (t_{R}) der bemerkenswerten Winkelstellung (θ_{R}) bezüglich des Datums der Anfangs-Winkelstellung bestimmt wird.

2. Verfahren nach Anspruch 1, bei dem das Ausgangssignal des Sensors (12) für eine Biegung oder eine Deradialisierung des Luftreifens (10) kennzeichnend ist.

3. Verfahren nach Anspruch 2, bei dem der bemerkenswerte Extremwert des Bezugssignals (sr(t)) einem lokalen Absolutwert-Maximum der Amplitude des Signals, wenn das Ausgangssignal des Sensors (12) für eine Biegung des Luftreifens (10) kennzeichnend ist, oder einem lokalen Absolutwert-Maximum der Ableitung des Signals entspricht, wenn das Ausgangssignal des Sensors (12) für eine Deradialisierung des Luftreifens (10) kennzeichnend ist.

4. Verfahren nach einem der vorhergehenden Ansprüche, bei dem die an ein Signal s(t) angewendete vorbestimmte Funktion (f) die folgende ist:
wenn gilt s(t)>M, dann gilt f(s(t))=M,
wenn gilt s(t)<M, dann gilt f(s(t))=M+k.(s(t)-M),
wobei M den Mittelwert des Signals s(t) während eines vordefinierten Intervalls bezeichnet und k ein positiver Multiplikationskoeffizient ist.

5. Verfahren nach einem der vorhergehenden Ansprüche, bei dem, um den bemerkenswerten Extremwert des Bezugssignals (sr(t)) zu datieren, ein Folgesignal (s'(t)) des Bezugssignals (sr(t)) mit zwei Zuständen verwendet wird, und der bemerkenswerte Extremwert des Bezugssignals (sr(t)) auf ein Übergangsdatum des Folgesignals (s'(t)) von einem Zustand zum anderen datiert wird.

6. Verfahren nach Anspruch 5, bei dem das Folgesignal s'(t) des Bezugssignals sr(t) ein diskretes Signal mit einem Zeitschritt p ist, dessen zwei Zustände folgendermaßen definiert werden:
- s'(p)=(1-λ).s'(p-1)+λ.(s(p-1)-s'(p)),
- wenn gilt s'(p)>s(p), dann gilt s'(p)=s(p),
wobei λ ein Wert zwischen 0 und 1 ist und der Anfangswert von s' zufällig gewählt wird.

7. Verfahren nach einem der vorhergehenden Ansprüche, bei dem das Datum (t_{R}) der bemerkenswerten Winkelstellung (θ_{R}) des Sensors ausgehend von dem Datum (t₀) der Anfangs-Winkelstellung (θ₀), einer geschätzten Drehgeschwindigkeit des Luftreifens und der Winkelabweichung (θ_{R}-θ₀) zwischen der bemerkenswerten Winkelstellung und der Anfangs-Winkelstellung (θ₀) bestimmt wird.

8. Verfahren nach Anspruch 7, bei dem das Datum (t_{R}) des nächsten Übergangs des Sensors in die bemerkenswerte Winkelstellung (θ_{R}) ausgehend von einer geschätzten Drehgeschwindigkeit des Luftreifens bei einer vorhergehenden Umdrehung des Luftreifens und dem bestimmten Datum des Übergangs des Sensors in die Anfangs-Winkelstellung vorhergesagt wird.

9. Verfahren nach einem der vorhergehenden Ansprüche, bei dem das Datum (t_{R}) der bemerkenswerten Winkelstellung (θ_{R}) des Sensors ausgehend von dem Datum der Anfangs-Winkelstellung (θ₀), einer geschätzten Drehbeschleunigung des Luftreifens und der Winkelabweichung zwischen der bemerkenswerten Winkelstellung und der Anfangs-Winkelstellung bestimmt wird.

10. Verfahren nach einem der vorhergehenden Ansprüche, bei dem, wenn mindestens zwei Sensoren vom Luftreifen getragen werden, wobei die Winkelabweichung zwischen Sensoren in einem mit dem Luftreifen verbundenen Bezugssystem gleich der Winkelabweichung (θ_{R}-θ₀) zwischen der bemerkenswerten Winkelstellung (θ_{R}) und der Anfangs-Winkelstellung (θ₀) ist, das Datum (t_{R}), an dem einer der Sensoren sich in der bemerkenswerten Winkelstellung (θ_{R}) befindet, bestimmt wird, indem es dem Datum gleichgestellt wird, an dem der andere Sensor in der Anfangs-Winkelstellung (θ₀) ist.
